Europäisches Patentamt

European Patent Office

Office européen des brevets

(11) Veröffentlichungsnummer: **0 259 505 B1**

# EUROPÄISCHE PATENTSCHRIFT

(45) Veröffentlichungstag der Patentschrift: **04.11.92**

(21) Anmeldenummer: **86111877.6**

(22) Anmeldetag: **27.08.86**

(51) Int. Cl.⁵: **G11B 7/14**, G03B 31/02

(54) **Optische Abtastvorrichtung für Stereo- Lichttonspuren von Kinofilmen.**

(43) Veröffentlichungstag der Anmeldung:
**16.03.88 Patentblatt 88/11**

(45) Bekanntmachung des Hinweises auf die
Patenterteilung:
**04.11.92 Patentblatt 92/45**

(84) Benannte Vertragsstaaten:
**DE FR IT**

(56) Entgegenhaltungen:
**FR-A- 838 794**
**US-A- 1 922 821**
**US-A- 3 235 672**
**US-A- 4 087 634**

(73) Patentinhaber: **ANSCHÜTZ & CO. GmbH**
**Postfach 1166**
**W-2300 Kiel 1(DE)**

(72) Erfinder: **Glöer, Hans**
**Ruschsehn 4**
**W-2300 Klausdorf/Schwentine(DE)**
Erfinder: **Perkams, Jürgen**
**Schönberger Landstrasse 21**
**W-2316 Probsteierhagen(DE)**

(74) Vertreter: **Baumann, Eduard, Dipl.-Phys.**
**Postfach 1201 Sattlerstrasse 1**
**W-8011 Höhenkirchen bei München(DE)**

**Beschreibung**

Die Erfindung bezieht sich auf eine optische Abtastvorrichtung für Stereo- Lichttonspuren gemäß dem Oberbegriff des Anspruches 1.

Eine derartige Vorrichtung ist aus US-A-3 235 672 bekannt

Derartige Abtastvorrichtungen stellen eine preiswerte, einfach zu handhabende und qualitativ relativ hochstehende moderne Art der Stereoton- Übertragung dar.

Dennoch ergaben sich einige Probleme hinsichtlich der Qualität, insbesondere hinsichtlich einer sauberen Trennung zwischen den beiden Stereo- Kanälen und hinsichtlich der Vermeidung eines übersprechens von einem Kanal zum anderen.

Der Erfindung liegt die Aufgabe zugrunde, eine optische Abtastvorrichtung gemäß dem Oberbegriff des Anspruches 1 so auszugestalten, daß zwischen den Stereo- Kanälen eine absolut saubere Trennung erfolgt und ein Übersprechen vermieden wird.

Die Aufgabe wird erfindungsgemäß durch die Merkmale des Kennzeichens des Anspruches 1 gelöst. Eine weitere Ausgestaltung der Erfindung ist im Unteranspruch unter Schutz gestellt.

Aus FR-A-838 794 ist es bekannt für jede von zwei Spuren jeweils einen separaten Lichtkörper zu verwenden, wobei die Enden jeweils auf eine der Spuren und einen der Empfänger ausgerichtet sind und wobei die beiden Lichtleit-Körper gegenüber der optischen Achse der Tonoptik eine Schrägneigung aufweisen.

Durch den Erfindungsgegenstand, wird vermieden, daß über die Projektionsoptik ein Teil des projizierten Lichtes nicht zum zugeordneten elektro- optischen Empfänger, sondern zum Empfänger des anderen Stereo- Lichttonkanales projiziert wird.

Durch den Erfindungsgedanken konnte in überraschend einfacher Weise eine erhebliche Qualitätsverbesserung erzielt werden.

Darüberhinaus konnte auch der Störspannungsabstand verbessert werden, sowie die Empfindlichkeit des Systems gegen statische Aufladung Da die elektro- optischen Empfänger in geschützter Lage angeordnet sind, ergibt sich auch eine höhere Betriebssicherheit als bei bekannten Systemen.

Die Lichtleitstäbe sind justierbar angeordnet, und zwar sowohl hinsichtlich Höhe, Seite und Focus. Das heißt, daß die Lichtleitstäbe Ungenauigkeiten der Anordnung der Projektionsoptik, der Laufschiene für den Film und der Anordnung der elektro- optischen Empfänger vollständig ausgleichen können, so daß eine optimale optische Ausrichtung erfolgt, und zwar für jede der beiden Stereo- Lichttonspuren getrennt.

Vorzugsweise wird die Abtastvorrichtung für die zweikanalige optische Abtastung von 35 mm- und 16 mm- Kinofilmen eingesetzt.

Das in der Projektionsoptik in Form einer Tonoptik erzeugte gebündelte Licht trifft auf die beiden Lichttonspuren des vorbeilaufenden Filmes auf, tritt durch den Film in modulierter Weise hindurch, das modulierte Licht wird von den ausgerichteten Lichtleitstäben aufgenommen und zum Eingang der zugeordneten Solarzellen weitergeleitet. Dort wird das modulierte Licht zu entsprechenden elektrischen Signalen weiterverarbeitet, die der Tonerzeugung dienen.

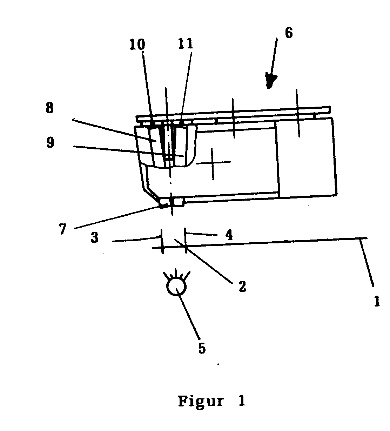

Ein Ausführungsbeispiel der Erfindung ist in der einzigen Figur dargestellt, die eine schematische Darstellung zeigt.

In der Figur bewegt sich der Film 1 in einer Richtung senkrecht zur Papierebene. Der Bereich der beiden (nicht gezeigten) nebeneinander liegenden Tonspuren ist mit 2 bezeichnet und durch zwei Begrenzungsbalken 3 und 4 angedeutet. Auf der einen Seite des Filmes (1) ist schematisch eine Projektionsoptik in Form einer Tonoptik (5) dargestellt. Auf der der Tonoptik (5) gegenüberliegenden Seite des Filmes (1) ist eine allgemein mit (6) bezeichnete elektro-optische Empfangseinrichtung dargestellt. Das Licht gelangt zunächst durch ein Fokussierobjektiv (7) und trifft dann auf zwei nebeneinanderliegende Lichtleitstäbe (8) und (9) auf. Es ist erkennbar, daß die beiden Lichtleitstäbe (8) und (9) eine gewisse Schrägneigung gegenüber der optischen Achse der Tonoptik (5) aufweisen. Dies soll die spezielle Ausrichtung derselben andeuten. Hinter den Lichtleitstäben ist je eine jeder Lichttonspur zugeordnete Solarzelle (10) und (11) angeordnet.

**Patentansprüche**

1. Optische Abtastvorrichtung für Stereo- Lichttonspuren von Kinofilmen, bei der die Lichttonspuren des vorbeilaufenden Filmes durch eine Projektionsoptik (5) angestrahlt werden und auf der gegenüberliegenden Seite der Lichttonspuren (2) elektro- optische Empfänger zur Verarbeitung der empfangenen Lichtsignale in elektrische Signale vorgesehen sind,
dadurch gekennzeichnet, daß sie (6) als kompakte Einheit ausgebildet ist, auf der zwei gegenüber der optischen Achse der Tonoptik (5) schräg geneigte Lichtleitstäbe (8, 9) derart justierbar angeordnet sind, daß die Lichteingangsseite auf die zugeordnete Lichttonspur und die Lichtausgangsseite auf den zugeordneten elektro- optischen Empfänger (10, 11) ausrichtbar ist, der jeweils an der Lichtausgangsseite jedes Lichtleitstabes (8, 9) an der gleichen kompakten Einheit angeordnet ist.

2. Vorrichtung nach Anspruch 1, dadurch gekennzeichnet, daß als eletro- optische Empfänger Solarzellen und als Übertrager-Lichtleitstäbe Glasfaserstäbe eingesetzt werden.

**Claims**

1. Optical scanning device for stereo optical soundtracks in cinematographic films in which the optical soundtracks of the passing film are irradiated through a projection optical unit (5) and in which the light signals thus received are processed by electro-optical receivers on the other side of the optical soundtracks, characterized by the fact that it (6) is formed as a compact unit in which two inclined light rods (8, 9) located to the sides of the optical axis of the projection optical unit (5) are positioned in an adjustable way meaning that the light entrance side on the respective optical soundtrack and the light exit side on the respective electro- optical receiver (10, 11) can be aligned, whereby the latter are arranged on the light exit side of the two light rods (8, 9) as part of the same compact unit.

2. Device according to claim 1, characterized by solar cells employed as electro- optical receivers and glass fibre rods employed as transformer light rods.

**Revendications**

1. Lecteur optique pour pistes optiques stéréo dans des films cinématographiques dans lequel les pistes optiques sonores du film transporté à travers le dispositif sont traversées par le faisceau lumineux généré par un dispositif de projection optique (5), faisceau qui, de l'autre côté des pistes optiques sonores du film (2), rencontre des récepteurs opto-électroniques qui transforment les signaux lumineux reçus en signaux électriques, caractérisé en ce qu'il est réalisé sous forme d'unité compacte dans laquelle deux baguettes de transmission optique (8, 9) inclinées obliquement par rapport à l'axe optique de la source optique sonore (5) sont disposées de manière réglable de telle façon que leur entrée puisse être orientée sur la piste optique sonore qui leur est respectivement affectée et que leur sortie puisse être orientée sur le récepteur opto-électronique (10, 11) qui leur est respectivement affecté et qui est disposé à la sortie optique de chaque baguette de transmission optique (8, 9) dans la même unité compacte.

2. Lecteur selon la revendication 1, caractérisé en ce que les récepteurs opto-électroniques sont des cellules solaires et que les baguettes de transmission optique sont des baguettes en fibres de verre.

Figur 1